(19) Europäisches Patentamt
European Patent Office
Office européen des brevets

(11) EP 4 303 780 A1

(12) EUROPEAN PATENT APPLICATION

(43) Date of publication:
10.01.2024 Bulletin 2024/02

(21) Application number: 22183667.9

(22) Date of filing: 07.07.2022

(51) International Patent Classification (IPC):
G06N 10/60 (2022.01)     G06N 3/04 (2023.01)
G06N 3/08 (2023.01)

(52) Cooperative Patent Classification (CPC):
G06N 10/60; G06N 3/045; G06N 3/08

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Terra Quantum AG
9400 Rorschach (CH)

(72) Inventors:
• Deshpande, Ajinkya
9400 Rorschach (CH)
• Melnikov, Alexey A.
9400 Rorschach (CH)

(74) Representative: Kretschmann, Dennis
Boehmert & Boehmert
Anwaltspartnerschaft mbB
Pettenkoferstrasse 22
80336 München (DE)

(54) **METHOD AND SYSTEM FOR SOLVING QUBO PROBLEMS WITH HYBRID CLASSICAL-QUANTUM SOLVERS**

(57)     A computer-implemented method for selecting processing hardware based on a given quadratic unconstrained binary optimization, QUBO, problem, said method comprising the steps of encoding the QUBO problem in a corresponding QUBO graph problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation; providing the QUBO graph problem as an input to a trained graph neural network on a processing system; retrieving a predicted performance metric for solving the QUBO problem with a variational quantum solver from an output of the trained graph neural network to the QUBO graph problem provided at the input; and, based on the predicted performance metric, providing the QUBO problem to the variational quantum solver implemented on quantum hardware.

Fig. 1

**Description**

FIELD OF THE INVENTION

The present invention is in the field of quantum computing. More precisely, the present invention relates to finding solutions to quadratic unconstrained binary optimization problems using hybrid quantum-classical solvers.

BACKGROUND

Quantum computers provide a platform of controllable quantum mechanical systems whose state and interaction can be controlled in order to perform a computation. The computation is realized by a deterministic evolution of the controllable quantum mechanical systems, e.g. qubits as quantum analogs of classical bits, and the state of the quantum mechanical systems can be measured to determine the outcome of the computation.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In order to compute solutions to problems which are considered intractable on classical computers, a quantum computer can leverage the special properties of quantum mechanical states, in particular the superposition and entanglement of different quantum states, to find solutions with a comparatively low number of calculation steps.

However, the superposition/entangled states of quantum mechanical systems are inherently volatile (e.g. suffer from decoherence) and the control and measurement of these systems is subject to fidelity margins, such that state-of-the-art quantum computers are currently limited both in the number of controllable quantum mechanical systems (qubits) as well as the number of successively performed control actions (quantum gates).

Despite these shortcomings, variational quantum algorithms, such as the Quantum Approximate Optimization Algorithm (QAOA) disclosed by Farhi et al. ("A Quantum Approximate Optimization Algorithm"), are promising applications for near term available quantum processors, i.e. noisy intermediate-scale quantum (NISQ) devices, since there is indication that QAOA may be able to be used in order to provide Quantum Advantage to sets of problems. QAOA defines a variational quantum circuit specific for a given problem, wherein the quantum gates in the circuit have variable actions on qubits in a qubit register, the variable actions being parametrized by variational parameters. After preparation of the qubits in a known initial state and application of the variational quantum circuit with an initial guess for the variational parameters, said variational parameters may be subsequently varied to extremize a cost function attributing a cost to the output of the circuit, such that an output of the variational quantum circuit approaches an optimal solution to the given problem.

Verdon et al. ("Learning to learn with quantum neural networks via classical neural networks") apply trained recurrent classical networks in the feedback loop to update the variational parameters of a quantum neuronal network (QNN) based on QAOA. An LSTM recurrent neural network is used to recursively propose updates to the QNN parameters, thereby acting as the classical black-box optimizer for quantum-classical optimization. At a given iteration, the RNN receives as input the previous QNN query's estimated cost function expectation as well as the variational parameters for which the QNN was evaluated. After a limited amount of runs, the quantum neuronal network is considered in an initialized state, and another optimizer is used for fine tuning of the solution.

Jain et al. ("Graph neural network initialization of quantum approximate optimization") apply trained graph neural networks (GNN) to warm-start a QNN for solving Max-Cut problems. The GNN is trained to output a probability for each node being on either side of the cut, from which a candidate solution can be derived, which can be used to find an initial state and an initial angle for the mixer Hamiltonian of the QNN to warm start the QNN. The GNN is trained in an unsupervised learning approach, wherein the cost attributed with the candidate solution is extremized, such that the GNN approximates an optimal solution to a Max-Cut problem.

SUMMARY OF THE INVENTION

However, the quality of a solution by a variational quantum circuit may depend on the problem to which the variational quantum circuit is applied, and can vary significantly for different problems. Moreover, the known warm-start approaches may still require a significant number of iterations of the variational quantum circuit.

In view of this state-of-the-art, the object of the invention is to improve the efficiency related to the use of NISQ devices, particularly with respect to solution quality and calculation speed.

This object is solved by two methods, a computer program and a system according to the independent claims. The dependent claims relate to preferred embodiments.

According to a first aspect, the invention relates to a computer-implemented method for selecting processing hardware based on a given quadratic unconstrained binary optimization, QUBO, problem. The method comprises the steps of encoding the QUBO problem in a corresponding QUBO graph problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation, and providing the QUBO graph problem as an input to a trained graph neural network on a processing system. The method further comprises retrieving a predicted performance metric for solving the QUBO problem with a variational quantum solver from an output of the trained graph neural network to the QUBO graph problem provided at the input, and based on the predicted performance metric, providing the QUBO problem to the variational quantum solver implemented on quantum hardware.

Quantum hardware is difficult to access currently and one would prefer to use it only in cases where the quality of the solution given by it is good. The inventors found that a graph neural network can be trained to predict a performance metric, which is obtainable when actually solving the problem with a variational quantum solver, such that the trained graph network may predict whether the QUBO graph problem instance will benefit from Quantum Advantage, or whether the projected solution will have a quality which is too low to warrant the use of the variational quantum solver over the use of a classical algorithm to solve or approximate a solution of the QUBO problem. In other words, the performance metric may provide a qualitative and/or quantitative indicator related to the predicted quality of the solution, when actually solving the QUBO problem with the variational quantum solver. Accordingly, the method may automatically select suitable processing hardware for a given problem based on the symmetry of the problem, thereby increasing the efficiency of using variational quantum networks to solve QUBO (NP-hard) problems. The graph neural network was found to generalize the classification task over larger problems (graphs) and to provide an output which correlates with the actual values for the performance metric when a variational quantum network is applied in a variational quantum solver for finding a solution.

Generally, the performance metric may classify the quality of the best solutions obtainable by applying the variational quantum network to solve the QUBO problem. Based on the predicted performance metric meeting a threshold condition, e.g. when the performance metric is below or above a pre-determined threshold, the QUBO problem may be provided to a different solver, such as a classical solver implemented in a classical processing system, or to a different (variational) quantum solver.

In preferred embodiments, the trained graph neural network has been trained to estimate the quantum approximation ratio, when solving the QUBO problem with the variational quantum solver, or a performance metric based thereon.

The quantum approximation ratio may be defined as a ratio between a cost associated with a best solution by the variational quantum solver and a cost of an optimum solution or a cost of a best approximate solution obtained with a classical solver, the costs being calculated based on a cost function attributing a quantitative quality metric to candidate solutions to the QUBO problem.

A QUBO problem is an optimization problem in which a quadratic function over binary variables is extremized, such that the cost may be the quadratic function, or a cost based thereon, which attributes a performance metric to the solution of the QUBO metric in view of the QUBO problem. The QUBO problem may be defined as finding a binary vector $x^*$ that is minimal (maximal) with respect to the objective function $f_Q$ among all other binary vectors, wherein $f_Q$ is a quadratic polynomial over binary variables

$$f_Q(x) = \sum_{i=1}^{n}\sum_{j=1}^{i} q_{ij} x_i x_j \tag{1}$$

with $x_i \in \mathbb{B}$ for $i \in [n]$ and coefficients $q_{ij} \in \mathbb{R}$ for $1 \le j \le i \le n$, where $[n]$ denotes the set of strictly positive integers less or equal to $n$, and $\mathbb{B} = \{0,1\}$.

The quantum approximation ratio may then be the ratio between the objective function for the best solution obtained with the variational quantum network $f_Q(x_{variational})$ divided by the objective function of the best solution, e.g. obtainable by brute-forcing the problem $f_Q(x_{optimal})$, or a function which is based on, mathematically equivalent, or proportional to said ratio.

The QUBO problem may be encoded into a QUBO graph problem by designating each binary variable as a graph node. The edge weight between two nodes may be equal to the coefficient of the term in the objective function containing the two variables these nodes are representing. If the edge weight is o, the edge can be removed. Node weights may be equal to the coefficient of the term containing only the variable represented by that node. The resulting QUBO graph representation may capture the symmetry/structure of the QUBO problem and may be processed by the graph neural network. However, some QUBO problems, such as the MaxCut problem, may have an intrinsic QUBO graph representation and may be provided directly to the graph neural network, such that no encoding may be necessary.

Graph neural networks are neural networks, generally implemented on classical processing hardware, which define a series of trainable transformations for a graph, which may be considered as a series of nodes interconnected by edges, wherein the nodes may be associated with feature vectors and/or the edges may be associated with respective weights. The graph neural network may process the graph, such that an output of the graph neural network may capture the symmetry of the graph and may generalize over different equivalent notations of graphs having the same or similar structure, such as the same output for graphs in which the nodes have merely been relabeled.

In preferred embodiments, the trained graph neural network is a convolutional graph neural network, in particular a spatial graph neural network.

Convolution graph networks comprise generalized convolutional operations on the nodes/edges of a graph, which may be categorized into spectral or spatial approaches. A spectral approach to graph neural networks may comprise applying a graph Fourier transform that converts the input graph signal into its projection in the space with a basis being the eigenvectors of the normalized graph Laplacian, and the convolution may be defined in terms of the Fourier transform. Conversely, in a spatial approach, the convolution may be similar to convolutions defined for image manipulations acting on the nodes/edges of the graph and may use a message passing paradigm.

For example, the Graph Neural Network may comprise nodes which update their respective associated values (feature vectors) using information about the values of their neighboring nodes in multiple graph convolution layers.

In preferred embodiments, the trained graph neural network comprises a plurality of graph convolution layers, wherein each convolution layer comprises an aggregation step for aggregating, for each node of the QUBO graph problem, feature vectors of neighboring nodes into an aggregated feature vector, and a transformation step, wherein an original feature vector of the node and the aggregated feature vector are transformed to an updated feature vector for each node according to a trainable transformation. For example, the feature vectors may comprise information pertaining to the edges connected to the node.

The aggregating step may be implemented in multiple ways, e.g. by summing or averaging the features of the neighboring nodes, selecting minimum or maximum values of the neighboring nodes and/or based on attention mechanisms related to the features of the neighboring nodes, and the aggregated features of the neighboring nodes may be combined with the features of the processed node and/or may be transformed to obtain the updated feature vector. The trainable transformation generally involves the application of machine-learning techniques, such as by transforming the aggregated feature with a multi-layer perceptron towards the updated feature vector. For example, in a Graph Isomorphism (neural) network, GIN, the features $h_v^{k-1}$ of each node at layer $k\text{-}1$ may be transformed towards the updated feature vector $h_v^k$ according to

$$h_v^{(k)} = MLP\left( \left(1 + \epsilon^{(k)}\right) \cdot h_v^{(k-1)} + \sum_{u \in N(v)} h_u^{(k-1)} \right) \qquad (2)$$

with N(v) being the neighbors of the processed node $v$, $\epsilon^{(k)}$ being a weight for adding the previous features $h_v^{(k-1)}$ of the processed node to the aggregated (summed) features of the neighboring nodes and *MLP (x)* representing the application of a multi-layer perceptron to the feature vector x. In other words, the transformation on each node may comprise summing all the features of neighboring nodes and itself (weighted according to the factor epsilon $\epsilon^{(k)}$), and then transforming the result using a Multi-Layer Perceptron.

Edge weights may be considered as part of the feature vector, as part of the convolution (e.g. the transformation function, such as Eq. (2)) and/or by treating the edges as nodes in the graph neural network. For example, an encoding can be used to indicate whether a particular node of the graph neural network came from a graph node or a graph edge. The graph can then be treated as having only node features. Additionally or alternatively, the convolution step may comprise a transformation based on the respective node, a neighboring node and the connecting edge, e.g. for each neighboring node.

As another example, the graph convolutional network, GCN, introduced by Kipf and Welling (Semi-Supervised Classification with Graph Convolutional Networks, 2017) may use the propagation step

$$H^{(l+1)} = \sigma\left( D^{-\frac{1}{2}} \breve{A} D^{-\frac{1}{2}} H^{(l)} W^{(l)} \right) \qquad (3)$$

wherein $H^l$ is the activation (feature) matrix at the $l$th layer of the graph convolutional network, indicating the feature vectors of all the nodes in matrix form, $\breve{A} = A + I_N$ is the adjacency matrix of an undirected graph with self-connections, $I_N$ is the identity matrix, $D_{ii} = \sum_j \breve{A}_{ij}$, $W^{(l)}$ is a (trainable) layer specific weight matrix, and $\sigma$ denotes an activation function, such as ReLu.

The resulting updated values (feature vectors/activation matrices) after a plurality of propagation steps may then be processed by further layers of a neural network, which may include a graph level readout, which may transform the updated feature vectors/values of the nodes into an output vector and further layers, e.g. fully-connected layers, to provide an output in response to an extracted symmetry of the graph by the aggregation layers.

In preferred embodiments, the trained graph neural network comprises a pooling layer for pooling the output of at least one of the plurality of the graph convolution layers, and a fully-connected layer between the pooling layer and an output of the trained graph neural network.

As in the aggregating step, different pooling techniques may be used in embodiments, e.g. by summing or averaging the features of the nodes after the graph convolutional layers, selecting minimum or maximum values of nodes and/or based on attention mechanisms related to the features of the nodes, such as to result in a feature vector derived from the updated feature vectors of all nodes.

For example, in a GIN, the graph neural network may use sum-pooling for global pooling/Graph level readout, i.e. all of the feature vectors may be summed, and the summed feature vector may be the graph level readout result (pooled features). A plurality of fully connected layers of neurons may subsequently be used to transform the pooled features towards a desired output. The fully-connected layers may comprise artificial neurons with any suitable activation function, e.g. ReLu, wherein each of the artificial neurons in a layer may be connected to all artificial neurons of a previous layer. As an example, the fully-connected layer may comprise three or four layers of fully-connected artificial neurons.

In preferred embodiments, the trained neural network has been trained by receiving a training set, the training set comprising a plurality of QUBO graph problems and a performance metric corresponding to each of the QUBO graph problems, the performance metric indicating a ratio between a quality indicator for a solution candidate determined using the variational quantum solver for the QUBO graph problem and the same quality indicator for a classical solution to the QUBO graph problem, wherein the quality indicator is in particular a cost associated with the solution candidate, and training a graph convolutional network on the training set, wherein the input of the graph convolution network receives the QUBO graph problems, and trainable parameters of the graph convolutional network are iteratively updated, such that the output of the graph convolutional network for a given QUBO graph problem approaches the performance metric.

The performance metric for the solutions by the variational quantum solver may be the quantum approximation ratio for the solution, e.g. as defined above, or a performance metric indicative for the quantum approximation ratio for the given QUBO graph problem.

The training set may be assembled from previous applications of the variational quantum solver to the plurality of QUBO graph problems, e.g. the quality indicator may be calculated for the best solution obtained/obtainable using the variational quantum solver, and the classical solution may be determined using classical methods, e.g. an optimum solution obtained via brute-forcing or classical approximation algorithms.

In preferred embodiments, the variational quantum solver comprises a variational quantum network for determining an output indicative for the solution to the QUBO problem, wherein a gate configuration of the variational quantum network is in particular selected based on the QUBO problem, wherein the variational quantum network is preferably based on a Quantum Approximate Optimization Algorithm, QAOA, and/or wherein the gate configuration preferably depends on a cost function attributing a cost to a solution for the QUBO problem and an optimal solution is associated with a global extremum of the cost function.

A variational quantum solver may generally comprise a plurality of qubits, whose quantum states may be manipulated by the application of quantum gates applied in sequence or in parallel to single qubits and/or multiple qubits.

The qubits can be initialized into an initial state, such as the ground state of each qubit. In some embodiments, after initialization of the qubits into their ground states, superposition states of each qubit in the qubit register are prepared, e.g. via the application of Hadamard gates.

Subsequently, a plurality of quantum gates may be applied to the qubits to transform their state towards an output state. In variational quantum solvers, the action of at least some of the quantum gates in the variational quantum network is parametrized, such that the measured output is a function of variational parameters parametrizing variable actions of (variational) quantum gates. The combined action of the (at least partially parametrized) quantum gates may be termed variational quantum network, as the operating principle may be similar to the operation of a neural network.

In some examples, layers of quantum gates may act on the qubits to link the qubits in the variational quantum network. A layer of quantum gates may comprise a cumulative action of a plurality of coherent operations on the state of the qubits in the qubit register. The cumulative action of the coherent operations in one layer should generally act on all qubits of the qubit register which are involved in the computation, or in other words, a layer of quantum gates should directly affect the state of all qubits in the qubit register. Each layer should comprise at least one multi-qubit gate and at least one variational quantum gate (which in principle could be the same gates). The skilled person will appreciate that a plurality of the quantum gates in a layer may be applied in parallel to the qubits to shorten the sequence of coherent operations on the state of the qubits in a layer. The subsequent application of a plurality of layers of quantum gates to the qubits may then form the variational quantum network, with the variational quantum network being parametrized by variational parameters for each layer.

The layers may contain the same types of quantum gates and may be applied sequentially to the qubit register. For example, each layer may feature the same architecture of quantum gates while different elements of the variational parameters may apply to the variational gates of the layer. In other words, the layers may feature the same quantum gate architecture, but the action of the quantum gates on the qubits in each layer may differ based on the variational parameters.

In some embodiments, the layers of quantum gates comprise the same arrangement of quantum gates in each layer and wherein the quantum gates in each layer in particular comprise a plurality of multi-qubit quantum gates which together act on all qubits of the qubit register.

After the layers of quantum gates have acted on the qubits, the qubits can be measured to obtain a characteristic outcome of the variational quantum network with respect to the known initial state. The outcome of the quantum mechanical computation may be linked to the classical solutions of the problem via the computational basis states of the qubits. The computational basis states may be orthogonal basis states of the Hilbert space spanned by the tensor product of the basis states of each qubit.

Initial variational parameters for the variational quantum gates can encode an initial (random) guess, and the outcome of the evaluation of the variational quantum network with the variational parameters can be measured to determine a corresponding solution. Based on the solution, a cost function of the QUBO problem may be classically evaluated to attribute a cost to the solution, or in other words, a measure is calculated of how good the solution is. Usually, the variable parameters are subsequently updated (iteratively) using a feedback-loop implemented in a classical processing system, such that the output approaches an optimal solution, making the variational quantum solver a hybrid quantum-classical algorithm.

For example, in QAOA, the quantum gate configuration of each of $p$ layers of quantum gates is determined based on the structure of the QUBO problem and comprises variable actions associated with the quantum gates. Specifically, each layer comprises a mixer Hamiltonian H($\beta$) and a problem Hamiltonian H($\gamma$) with variable actions $\beta$, $\gamma$, defining respective Unitaries U($\beta$), U($\gamma$), to produce, from an initial state $|\psi_o\rangle$, an output state

$$\left|\psi_p(\boldsymbol{\gamma}, \boldsymbol{\beta})\right\rangle = \left(\prod_{q=1}^{p} \widehat{U}_B(\beta_q)\widehat{U}_C(\gamma_q)\right)|\psi_o\rangle \qquad (4)$$

By varying the variable actions $\beta$, $\gamma$ using a suitable (classical) optimizer algorithm, the measured output quantum state can approach an output encoding the solution to the problem. However, other quantum algorithms, which may be tailored to a certain underlying quantum hardware may also be utilized in embodiments.

The trained graph neural network is preferably trained based on optimal solutions obtained by the variational quantum solver, to which a new QUBO problem is provided in the case that the performance metric predicted by the graph neural network meets a threshold indicating a predicted Quantum Advantage. Nonetheless, in some embodiments, the variational quantum solver to which the QUBO problem is provided may also differ from the variational quantum solver for which the graph neural network has been trained, e.g. the trained graph neural network may to some degree indicate, whether a quantum advantage may be exploited for the given QUBO problem. In other embodiments, a plurality of graph neural networks are trained to predict performance metric of different variational quantum solvers, such as to select a suitable variational quantum solver for a given QUBO problem.

The result of performing the method can provide the performance metric, which may indicate, whether the application of a variational quantum solver is efficient with respect to the application of a classical solver, which may allow quickly identifying suitable problem instances for solving with the variational quantum solver.

Moreover, the Inventors found that the graph neural network may also be used to directly predict optimal variational parameters for a variational quantum network, in particular based on the QAOA algorithm, which extremize the cost function, or at least provide a solution, which is close to the optimal solution obtainable using the variational quantum solver when iteratively updating the variational parameters towards an optimal solution.

In preferred embodiments, the method further comprises, as part of providing the QUBO graph problem to the variational quantum solver implemented on quantum hardware, providing the QUBO graph problem to a second trained graph neural network, wherein the second trained graph neural network has been trained, for a plurality of QUBO graph problems, to predict variational parameters associated with an optimal solution by the variational quantum solver, and receiving from the second trained graph neural network predicted variational parameters at an output of the second trained graph neural network. The method further comprises providing the predicted variational parameters and the QUBO problem to the variational quantum solver for determining a candidate solution for the problem with the variational quantum solver.

The candidate solution may therefore be determined based on the variational parameters received from the output of the second trained graph neural network. The candidate solution obtained in this way may be used as the final solution, or the variational quantum solver may be used to refine the candidate solution to extremize the cost function. The inventors found that the graph neural network trained to predict the variational parameters based on a given QUBO graph problem may not only provide solutions close to the optimal solutions obtainable using the variational quantum solver, but may also to some degree generalize the problem of finding optimal variational parameters (variable actions) for more complex QUBO problems than the ones of the training set. It is noted that a QUBO problem may be provided to both graph neural networks in parallel, and the pre-calculated output of the second graph neural network may be provided to the variational quantum solver if the performance metric meets the threshold. Compared to the prior art, in which neural networks are generally trained to predict the best solution, this approach may directly generalize to graphs with more nodes/variables than the problems in the training set.

According to a second aspect, the invention relates to a computer-implemented method for solving a given quadratic unconstrained binary optimization, QUBO, problem. The method comprises the steps of encoding the QUBO problem in a corresponding QUBO graph problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation, and providing the QUBO graph problem as an input to a trained graph neural network on a processing system. The method further comprises receiving predicted variational parameters for solving the QUBO problem with a variational quantum solver from an output of the trained graph neural network to the QUBO graph problem provided at the input, and providing the predicted variational parameters for the QUBO problem to the variational quantum solver implemented on quantum hardware.

In preferred embodiments, the variational quantum solver comprises a variational quantum network for determining an output indicative for the solution to the QUBO problem, wherein the quantum gate configuration of the variational quantum network is specific to the QUBO problem, and wherein the variational parameters define the output of the variational quantum network specific to the QUBO problem, wherein the variational quantum network is in particular based on a Quantum Approximate Optimization Algorithm, QAOA.

According to a third aspect, the invention relates to a system for solving for solving a given quadratic unconstrained binary optimization, QUBO, problem. The system comprising a processing system configured to obtain in a corresponding QUBO graph problem to the QUBO problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation, and provide the QUBO graph problem as an input to a trained graph neural network on a processing system. The processing system is further configured to receive a predicted performance metric for solving the QUBO problem with a variational quantum solver from an output of the trained graph neural network to the QUBO graph problem provided at the input, and based on the predicted performance metric, provide the QUBO problem to the variational quantum solver implemented on quantum hardware.

The system may implement the method according to the first or second aspect or any combination of their embodiments.

In some embodiments, the system may be configured to provide the QUBO problem to a classical solver implemented in a classical processing system, based on the predicted performance metric, e.g. as an alternative or in addition to providing the QUBO problem to the variational quantum solver implemented on quantum hardware.

In preferred embodiments, obtaining the corresponding QUBO graph problem comprises encoding, by the processing system, the QUBO problem in the corresponding QUBO graph problem.

In preferred embodiments, the system in particular comprises a machine readable model executable on the processing system and/or wherein the system further comprises AI processing hardware configured to implement the trained graph neural network, wherein the AI processing hardware in particular comprises a GPU, a neural processing unit, analog memory based hardware, or neuromorphic hardware.

The machine readable model may implement the trained graph neural network when running on suitable processing hardware. The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof, such as the afore-mentioned AI processing hardware. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

In preferred embodiments, the processing system is further configured to provide the QUBO graph problem to a second trained graph neural network, wherein the second trained graph neural network has been trained, for a plurality of QUBO graph problems, to predict variational parameters for the variational quantum solver associated with an optimal solution by the variational quantum solver, receive from the second trained graph neural network predicted variational parameters at an output of the second trained graph neural network, and provide the predicted variational parameters and the QUBO problem to the variational quantum solver for determining a candidate solution for the problem with the variational quantum solver

According to a fourth aspect, the invention relates to a computer program comprising machine readable instructions, which when the computer program is executed by a processing system cause the processing system to implement a method according to any embodiment of the first or second aspects and/or to implement a system according to any embodiment of the third aspect.

DETAILED DESCRIPTION OF EMBODIMENTS

The features and numerous advantages of the method and system according to the present invention will best be understood from a detailed description of preferred embodiments with reference to the accompanying drawings, in which:

Fig. 1        schematically illustrates an example of a hybrid quantum computation system;

Fig. 2        schematically illustrates an example of a variational quantum solver based on a QAOA algorithm;

Fig. 3        illustrates a flowchart of a method for dynamically selecting processing hardware based on a given QUBO problem according to an example;

Fig. 4        shows a schematic flow chart for illustrating the working principle of an exemplary convolutional graph neural network based on a spatial approach;

Fig. 5        illustrates a flowchart of a method for dynamically selecting variational parameters for solving a QUBO problem with a variational quantum network;

Fig. 6        illustrates an example of a flow chart of a method for solving a given QUBO problem;

Fig. 7        illustrates an example of a flow chart of a method for solving a given MaxCut optimization problem;

Fig. 8        illustrates a flow chart of an example method for constructing training sets for training two graph neural networks;

Fig. 9a-c     illustrate results for predicting a performance metric and the optimal parameters for a variational quantum solver implementing the QAOA algorithm according to some examples; and

Fig. 10A, B   illustrate two example graphs comprising nine nodes interconnected by edges of equal weight.

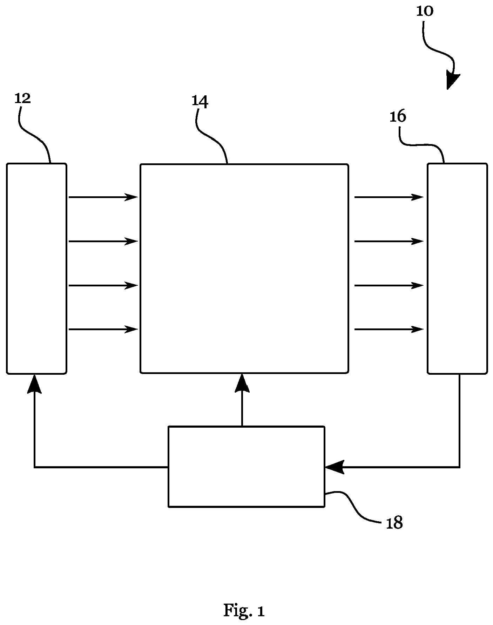

Fig. 1 schematically illustrates an example of a hybrid quantum computation system 10 for implementing and driving a variational quantum network. The system 10 comprises a qubit register 12 comprising a plurality of qubits. A plurality of quantum gates 14 may act on the qubits of the qubit register 12 to perform a computation, wherein variable actions of the plurality of quantum gates 14 may be parametrized by variational parameters. The outcome of the computation may be measured by a measurement sensor 16 which projects the states of the qubits onto the computational basis states of the hybrid quantum computation system 10. The outcome can be received by a controller 18.

The controller 18 may be configured to repeatedly perform a computation sequence. The computation sequence may comprise initializing the qubits of the qubit register 12 before each computation, such as into the ground state of each qubit, e.g. to form an initial state of the qubits of |++...+>. The controller 18 may then apply the plurality of quantum gates 14 to the qubits of the qubit register 12 to drive a coherent evolution of the qubits. Initially, the controller may produce superposition states of all qubits, e.g. by applying a Hadamard gate to each of the qubits, and may subsequently apply the plurality of quantum gates 14 including variational quantum gates with the variable actions. Following the coherent evolution, the state of the qubits in the qubit register 12 may be measured with the sensor 16. The measurement sensors 16 may be a plurality of single qubit state detectors for measuring the state of each qubit following the evolution according to the plurality of quantum gates 14. Repeating the measurement may allow determining the probability of each measurement outcome and the result may be employed for finding a solution to the QUBO problem. On the basis of the measured result, the controller 18 can classically calculate an "energy"/"cost" of the solution with a cost function of the QUBO problem to be solved.

For example, the cost function may be a MaxCut problem on an arbitrary graph, i.e. the problem of finding the cut through a set of connected nodes, such that the total weights of edges between the two separated sets is as large as possible. This problem can be mapped to several equivalent problems, such as the optimization of a chip layout in VLSI circuit design, and finding the correct solution is therefore of technical importance. The MaxCut problem may be parametrized as the QUBO problem of minimizing the cost function

$$C = \sum_{i,j=1}^{n_c} d_{ij}(x_i - x_j)^2, \tag{5}$$

where $d_{ij}$ is the weight of an edge between ith andjth nodes in a graph. The solution is a binary string $\vec{x}$ of nodes that show the correspondence to one of two sets. The elements of the corresponding QUBO matrix, in turn, may be $Q_{ij} = 2\, d_{ij}\,(i > j)$ and $Q_{ii} = -\sum_j d_{ij}$. Hence, after determining the probabilities of the outcome states of the quantum computational network, the cost may be calculated according to the respective cost function.

Conventionally, the controller 18 may then repeat the computation sequence with adjusted variable actions based on the outcome, such as to progressively improve the solution to a QUBO type problem associated with the measured outcome. For example, the controller 18 may repeat the computation sequence with adjusted operation parameters for the variational quantum gates in order to determine a gradient or energy landscape associated with the plurality of quantum gates 14 from the measured outcomes and may update the variational parameters based on the estimated gradient in order to progressively adjust the variational quantum network towards an improved solution.

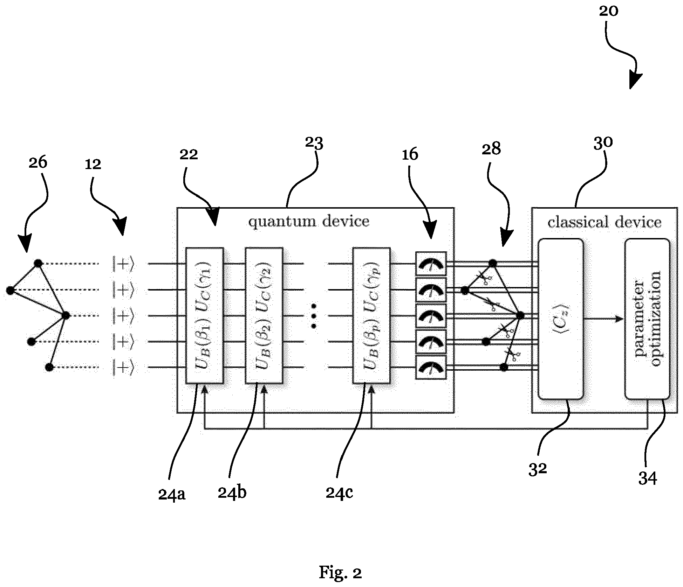

Fig. 2 illustrates an example of a variational quantum solver 20 based on a QAOA algorithm comprising a variational quantum network 22 with a plurality of quantum gates 14 implemented in a quantum device 23. The variational quantum network 22 comprises a qubit register 12 including a plurality of qubits with states $\Psi_1$-$\Psi_N$, and the evolution of each qubit state is illustrated as horizontal lines extending horizontally from the qubit register 12 towards the measurement sensors 16.

The qubits may be initially initialized into their ground states, e.g. |+>. The plurality of quantum gates 14 may comprise a plurality of Hadamard (H) gates or another initialization sequence (not shown) acting on each qubit of the qubit register 12 after the qubits have been initialized to prepare each qubit in a superposition state. The variational quantum network 22 may then comprise a plurality of $p$ layers 24a-c of quantum gates with equal structure, wherein the layers 24a-c represent a plurality of quantum operations on the qubits in the qubit register 12, which are subsequently applied.

Each layer 24a-c comprises a plurality of variational qubit gates whose variable actions are parametrized by the variational parameters $\beta$, $\gamma$. Specifically, in QAOA, the algorithm starts with the qubits in a uniform superposition of possible computational basis states

$$|\psi_0\rangle = \frac{1}{\sqrt{2^n}} \sum_{z=0}^{2^n-1} |z> \tag{6}$$

Then, a series of $p$ unitary operations, the layers 24-c, each characterized by the angles $\beta$ and $\gamma$ is applied. After these transformations the state becomes:

$$|\psi_p(\gamma,\beta)\rangle = \left(\prod_{q=1}^{p} \widehat{U}_B(\beta_q)\widehat{U}_C(\gamma_q)\right)|\psi_o\rangle \qquad (7)$$

In a QAOA algorithm, the first unitary is usually given by

$$\widehat{U}_C(\gamma_q) = \exp\left(-i\gamma_q\hat{C}\right) \qquad (8)$$

which adds a cost dependent phase to each term in the state. For MaxCut, the Cost function defined in Eq. 5 may be substituted directly, wherein each node $x_i$, $x_j$ in the problem graph 26 may be mapped to one of the qubits, as illustrated in the figure. The first unitary may couple nodes connected by common edges according to terms including both variables. The second unitary may be given by

$$\widehat{U}_B(\beta_q) = \exp\left(-i\beta_q\hat{B}\right) \qquad (9)$$

which implements coupling in the computational basis by using:

$$\hat{B} = \sum_{j=0}^{n-1} \hat{X}_j \qquad (10)$$

i.e. may implement single qubit rotations on a qubit j. Following the application of the layers 24a-c of quantum gates 14 onto the qubits, the state of the qubits may be measured by the measurement sensors 16. The measurement sensors 16 maybe a plurality of single qubit state detectors for measuring the state of each qubit following the evolution according to the plurality of quantum gates 14. Repeating the measurement may allow determining the probability of each measurement outcome and the result may be employed for finding a solution, such as the illustrated solution candidate 28, to the exemplary problem graph 26.

A classical computation system 30 may then determine updated parameter values $\gamma,\beta$ based on some optimization function, e.g. by computing a cost $\langle C_z \rangle$ in a cost calculation module 32, and determining updated parameter values $\gamma,\beta$ in a parameter update module 34, in order to iteratively approach a "good" solution, which may be close to the optimal solution.

However, the access to quantum hardware is currently still limited and the efficiency of using quantum hardware to solve a QUBO problem may also depend on the specific problem instance. Specifically, some QUBO problems may not benefit from a Quantum Advantage when solved by a variational quantum solver 20, or the solutions may have a cost significantly deviating from an optimal solution. Hence, it would be advantageous to apply the quantum hardware only to problems for which the variational quantum solver 20 is expected to provide a good solution.

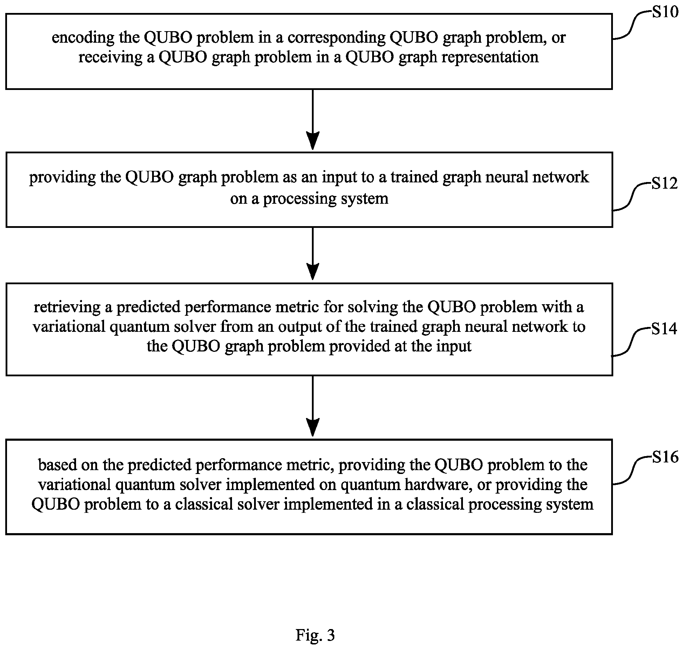

Fig. 3 illustrates a flowchart of a method for dynamically selecting processing hardware based on a given QUBO problem according to an example. The method comprises encoding the QUBO problem in a corresponding QUBO graph problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation (S10), and providing the QUBO graph problem as an input to a trained graph neural network on a processing system (S12). The method further comprises retrieving a predicted performance metric for solving the QUBO problem with a variational quantum solver 20 from an output of the trained graph neural network to the QUBO graph problem provided at the input (S14), and based on the predicted performance metric, providing the QUBO problem to the variational quantum solver 20 implemented on quantum hardware (S16).

For example, the graph neural network may be trained to predict the expectation value of the normalized cost function related to the QUBO problem, or the quantum approximation ratio r defined as the expectation value of the ratio between $C_z$ and the theoretical maximum value $C_{max}$

$$r = \frac{<C>}{C_{max}} \qquad (11)$$

as the performance metric for a given QUBO problem provided at its input, e.g. based on historical performance of the variational quantum solver 20 for similar QUBO problems. If the performance metric meets a threshold, the QUBO problem may be provided to the variational quantum solver 20. Otherwise, the QUBO problem may be provided to a classical solver implemented in a classical processing system, or a different (variational) quantum solver.

The graph neural network may extract features from a graph without discarding spatial information, and was found by the Inventors to be suitable for the task of performance metric prediction for variational quantum solvers 20 in their experiments.

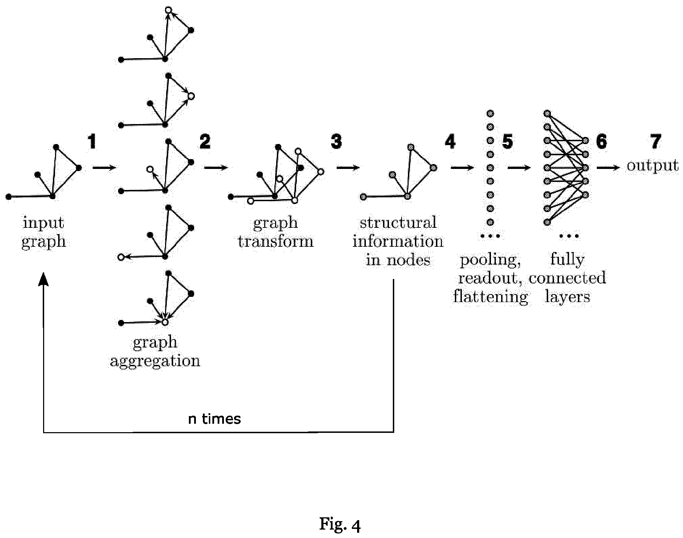

Fig. 4 shows a schematic flow chart for illustrating the working principle of an exemplary convolutional graph neural network based on a spatial approach.

In a first step (2), for each node in the input graph (1), the features of all neighboring nodes are aggregated. Some common ways to aggregate include summing, averaging, selecting minimal or maximal values or applying attention mechanisms to the feature vectors associated with the neighboring nodes. In a second step (3), the feature vector on each node, comprising the result of the first step (2) in which the features of neighboring nodes were aggregated, may be transformed into a new vector using a trainable transformation, resulting in an updated graph (4) including structural information extracted according to the previous two steps (2, 3).

Steps (2, 3) may be applied to the updated graph (4), such as to form a plurality of aggregation and transformation layers, which may iteratively aggregate the features of increasingly distant neighboring nodes with the application of each aggregation and transformation layer.

The results of the repeated application of the aggregation and transforming steps may subsequently be read out (5) in a pooling/readout/flattening layer. The graph level readout (5) may convert the Graph, which now contains a feature vector associated with each node, into a vector. Again, different approaches may be used in embodiments, such as Max-Pooling, Min-Pooling, Mean-Pooling and Sum-Pooling. Jump connections from preceding layers may be used, such that the features at the graph level readout (5) may depend on some or all of the intermediate feature vectors of the preceding layers, e.g. may depend on the intermediate results of the preceding aggregation and transformation steps. However, in some embodiments, only the final feature vectors of the last transformation and aggregation step may be used in order to perform the graph level readout (5).

The resulting vector may contain information about the graph. A few fully connected layers can be applied at this point, and the output may be obtained, which may be the performance metric predicted when solving the input problem (1) with a variational quantum solver 20, e.g. based on a QAOA algorithm.

Additionally or alternatively, the graph neural network may be trained to predict optimal variational parameters for the variational quantum solver 20 at its output, based on the QUBO graph provided at its input.

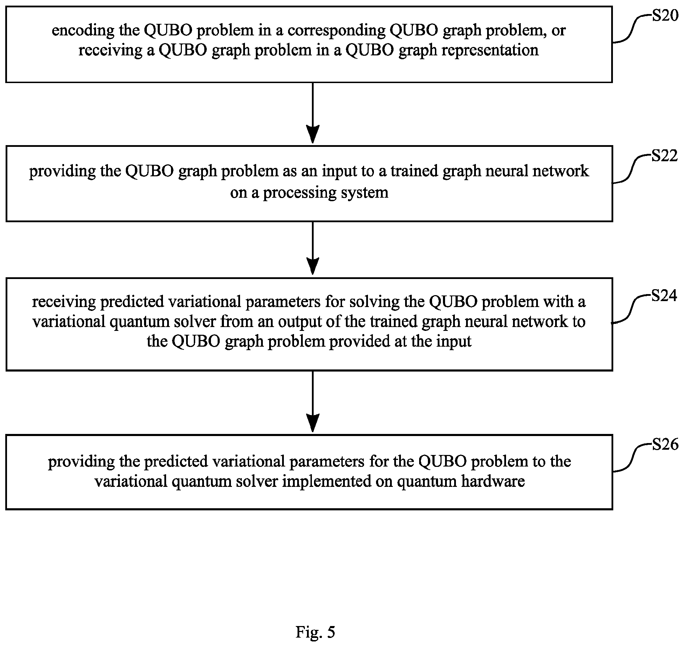

Fig. 5 illustrates a flowchart of a method for dynamically selecting variational parameters for solving a QUBO problem. The method comprises encoding the QUBO problem in a corresponding QUBO graph problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation (S20), and providing the QUBO graph problem as an input to a trained graph neural network on a processing system (S22). The method further comprises receiving predicted variational parameters for solving the QUBO problem with a variational quantum solver 20 from an output of the trained graph neural network to the QUBO graph problem provided at the input (S24), and providing the predicted variational parameters for the QUBO problem to the variational quantum solver 20 implemented on quantum hardware (S26).

Hence, a graph neural network may be used to predict the variational parameters of a variational quantum network, such as the variational parameters $\gamma, \beta$ of a QAOA algorithm implemented in a variational quantum solver 20.

As in the previous case, the graph neural network may be trained using historical results of applying a variational quantum solver 20 to a set of QUBO (graph) problems and recording the variational parameters $\gamma, \beta$ associated with the optimal solutions. The graph neural network may then be trained to predict the variational parameters $\gamma, \beta$ for a new given QUBO problem based on the given QUBO problem. For a QAOA algorithm, this may include predicting two parameters $\gamma, \beta$ per layer 24a-c of the variational quantum network implementing the QAOA algorithm, and may be independent of the size of the problem graph 26.

Hence, graph neural networks may be used to predict, based on a given QUBO problem, whether a variational quantum solver 20 will likely produce a "good" solution as well as parameters which are likely to result in a "good" solution, wherein a "good" solution is a solution with a cost close to the cost of the optimal solution to the QUBO problem, e.g. when brute-forcing the QUBO problem with classical hardware.

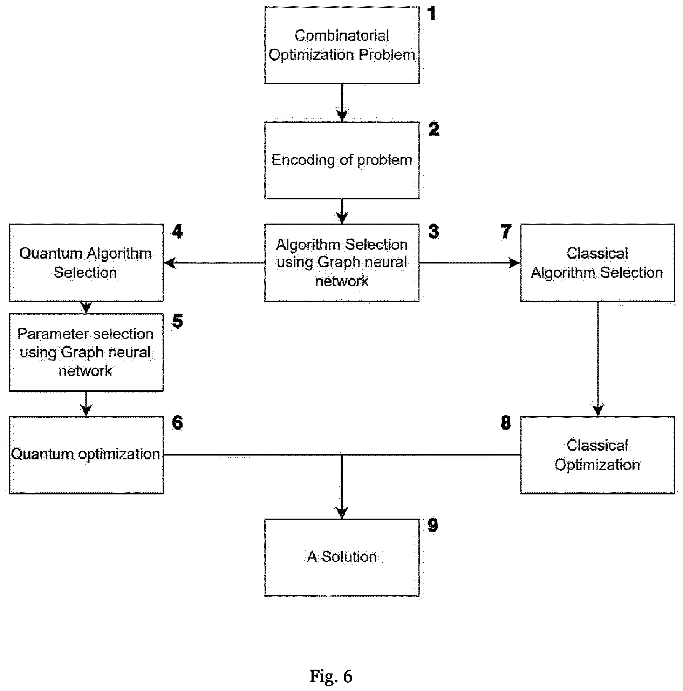

Fig. 6 illustrates an example of a flow chart of a method for solving a given QUBO problem. In a first step (1), a combinatorial optimization problem is provided to a processing system, which may be at least partially implemented on classical hardware. The processing system may be configured to encode the combinatorial optimization problem (2) in a graph representation for processing by a first graph neural network, if the combinatorial optimization problem had not already been provided in a graph representation. If the input problem is not in a QUBO graph representation, it may optionally be converted into a QUBO representation, and may be encoded into a graph representation processable by a first graph neural network by a processing system. For example, the converting of the problem into QUBO form may involve quadratization of a Polynomial Unconstrained Binary Optimization problem into its corresponding Quadratic Unconstrained Binary Optimization problem. The QUBO problem may then be encoded in a graph representation.

The first graph neural network may subsequently process the combinatorial optimization problem in the graph representation to provide a performance metric which may indicate, whether a variational quantum solver 20 is likely to provide a good solution to the combinatorial optimization problem. For example, the graph neural network may provide a normalized performance metric, such as the quantum approximation ratio, which may indicate how close the cost of an optimal solution by the variational quantum solver 20 is to the cost of a truly optimal solution to the combinatorial optimization problem.

Based on the performance metric, a suitable algorithm for solving the combinatorial optimization problem may be selected (3). If the performance metric indicates that a quantum algorithm implemented in a variational quantum solver 20 is expected to achieve a good solution, the processing system may select the quantum algorithm (4).

A second graph neural network may process the combinatorial optimization problem in graph representation (5) to predict variational parameters $\gamma, \beta$ for the quantum algorithm. The variational parameters $\gamma, \beta$ may be provided to the variational quantum solver 20 to generate a solution candidate at its output (6), which may be used as the solution (9) to the combinatorial optimization problem, or may be used as part of a warm start procedure, wherein the predicted variational parameters $\gamma, \beta$ may be subsequently updated in order to further refine the solution (9) towards an optimal solution obtainable with the variational quantum solver 20.

If the first graph neural network predicts a poor performance of the variational quantum solver 20, the processing system may select a classical algorithm (7) for solving or approximating a solution to the combinatorial optimization problem, and the classical algorithm maybe run on classical hardware to provide a solution (9) to the combinatorial optimization problem.

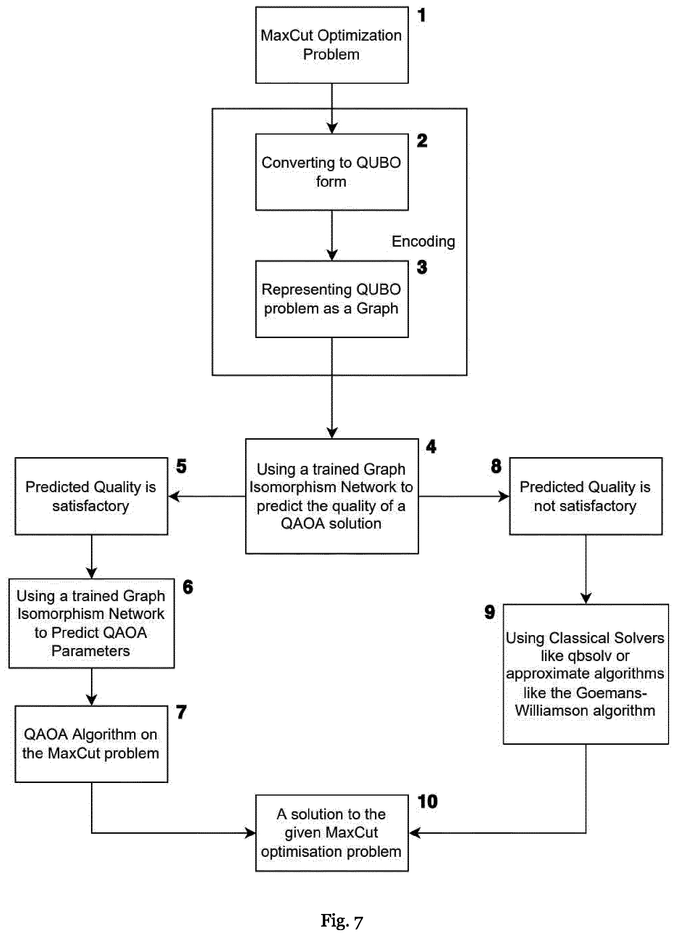

Fig. 7 illustrates an example of a flow chart of a method for solving a given MaxCut optimization problem. The method starts with receiving the MaxCut optimization problem (1), which may be already in a QUBO graph representation. If the input problem is not in a QUBO graph representation, it may optionally be transformed into a QUBO representation (2), and may be encoded into a graph representation (3) processable by a first graph neural network by a processing system. For example, each binary variable may correspond to a graph node. The edge weight between two nodes may be equal to the coefficient of the term in the objective function containing the two variables these nodes are representing. If the edge weight is 0, the edge can be removed. Node weights may be equal to the coefficient of the term containing only the variable represented by that node.

In the illustrated example, a trained graph isomorphism network is used as the graph neural network to predict the quantum approximation ratio that might be achieved by using a quantum algorithm implemented in a variational quantum solver 20 for the problem graph 26 (4). Based on this prediction, a suitable quantum or classical algorithm can be selected.

If the predicted quantum approximation ratio for the variational quantum solver 20 is satisfactory (5), the problem may be provided to the variational quantum solver 20. In the illustrated example, the variational quantum solver 20 implements QAOA as the Quantum Algorithm.

The method may further include using a second Graph neural network to predict optimal variational parameters $\gamma, \beta$ for the quantum algorithm (6). For example, a Graph Neural Network may be trained on other problem graphs 26 for which the optimal variational parameters $\gamma, \beta$ are already available. The trained graph neural network may subsequently be used to predict the optimal variational parameters $\gamma, \beta$ on a new problem graph.

Finally, a solution to the MaxCut problem can be computed based on the outcome determined using the variational quantum solver 20. In case the predicted quality was not satisfactory (8) or as part of a quality control mechanism, classical methods can be used to solve the problem (9). Some examples of possible classical methods for finding or approximating an optimal solution are "qbsolv" or the "Goemans-Williamson Algorithm". Ultimately, a solution assignment to the MaxCut problem may be provided (10) based on the solution determined using the variational quantum solver 20 and/or using a classical solver.

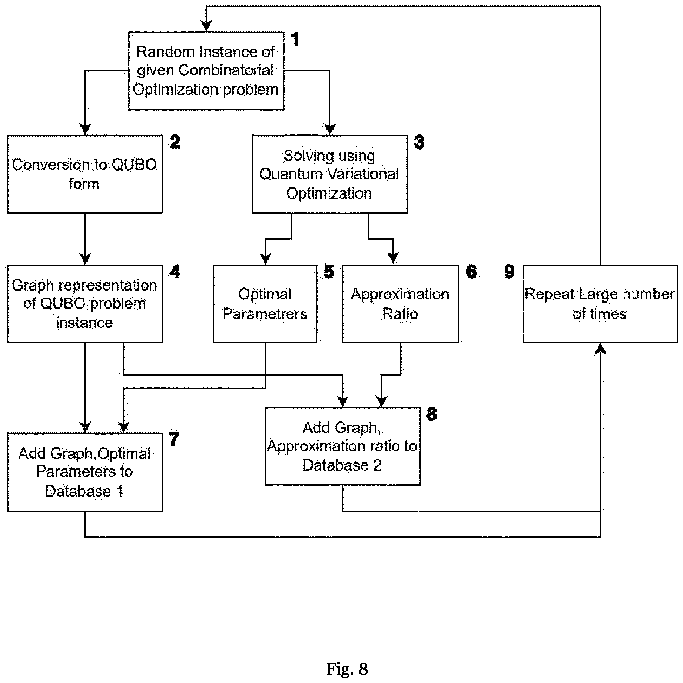

Fig. 8 illustrates a flow chart of an example method for constructing training sets for training two graph neural networks, which maybe used in the methods illustrated in Figs. 3 and 5-7.

The method comprises receiving a (random) problem instance of a given combinatorial optimization problem (1), such as a random MaxCut problem, which may be selected from a set of combinatorial optimization problems. The problem instance may be converted into QUBO form (2) using an appropriate algorithm implemented on classical hardware, if necessary, and a graph representation of the problem instance may be obtained (4), e.g. through encoding of the problem instance.

In parallel, the problem instance may be provided to a variational quantum solver 20 (3) for obtaining optimal variational parameters $\gamma, \beta$ (5) as well as the optimal solution for the problem instance by the variational quantum solver 20. Based on the obtained optimal solution by the variational quantum solver 20 as well as a truly optimal solution or a classical approximation of the solution (e.g. obtained using classical algorithms), a quantum approximation ratio may be calculated (6) as a performance metric for the obtained optimal solution.

The graph representation of the QUBO problem instance (4) as well as the optimal variational parameters $\gamma,\beta$ (5) associated with the obtained optimal solution by the variational quantum solver 20 may be added to a first database (7). The graph representation of the QUBO problem instance (4) as well as the approximation ratio (6) associated with the obtained optimal solution by the variational quantum solver 20 may be added to a second database (8).

The steps (1) to (8) may be repeated multiple times in order to construct a first and a second training set in the first and the second database, respectively, which may subsequently be used to train the graph neural network for predicting the optimal variational parameters $\gamma,\beta$ as well as the approximation ratio as an output of the graph neural network when a QUBO graph problem 26 is provided as the input to the graph neural network.

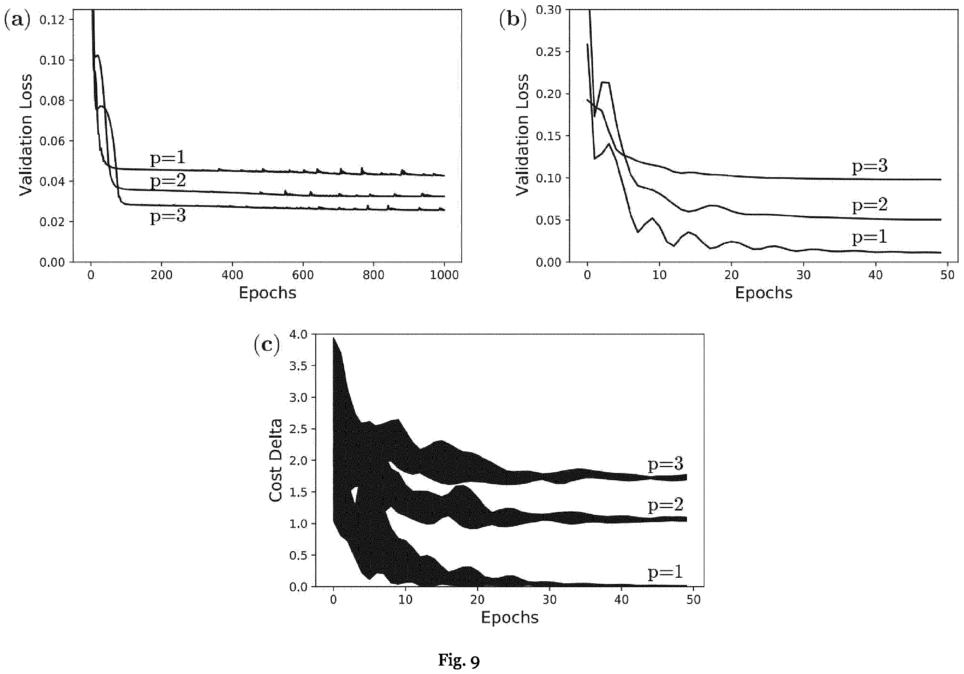

Fig. 9a-c illustrate results obtained by the Inventors for predicting a performance metric and the optimal parameters for a variational quantum solver 20 implementing the QAOA algorithm according to some examples. Two graph neural networks were trained based on a training dataset comprising graphs containing between 2 and 8 nodes (approx. 12,000 graphs) mostly composed of graphs including 8 nodes (approx. 11,000 graphs). The results were validated with a test dataset with problem graphs containing 9 nodes (approx. 260,000 graphs). The node and edge weights were equal in all graphs.

The results are presented for three different algorithms with "p" indicating the depth of the QAOA circuit, i.e. the number of layers 24a-c and associated pairs of variational parameters $\gamma,\beta$.

Fig. 9a shows training statistics of the Graph Isomorphism Networks that were used to predict the Quality of Solution (performance metric) when solving the respective problem with a variational quantum solver 20 implementing a QAOA algorithm. The Root Mean Square Error of the quantum approximation error is plotted against the number of epochs for 1000 epochs with a learning rate of 0.0001. As can be observed, in all three cases the error falls rapidly within the first 200 epochs and then slows down.

Fig. 9b shows training statistics of the Graph Isomorphism Networks that were used to predict the optimal variational parameters $\gamma,\beta$ of a QAOA algorithm for solving the respective problem. The Root Mean Square Error of the optimal parameters is plotted against the number of epochs for 1000 epochs with a learning rate of 0.0001.

Fig. 9c plots the Average Cost Delta and its standard deviation, of the same Graph Isomorphism Network as Fig. 9b over the 1000 training epochs. The Cost Delta is defined as the difference between the cost obtained from the predicted parameters and the cost obtained from the optimal parameters, for a particular graph on QAOA. This statistic is averaged over the training Graphs, and at every epoch a region is colored in which is indicative for the standard deviation. As can be observed, over time, the average cost delta and its standard deviation both decrease. This can be understood as the Graph Isomorphism Network progressively learning to predict variational parameters $\gamma,\beta$ that yield high-quality solutions.

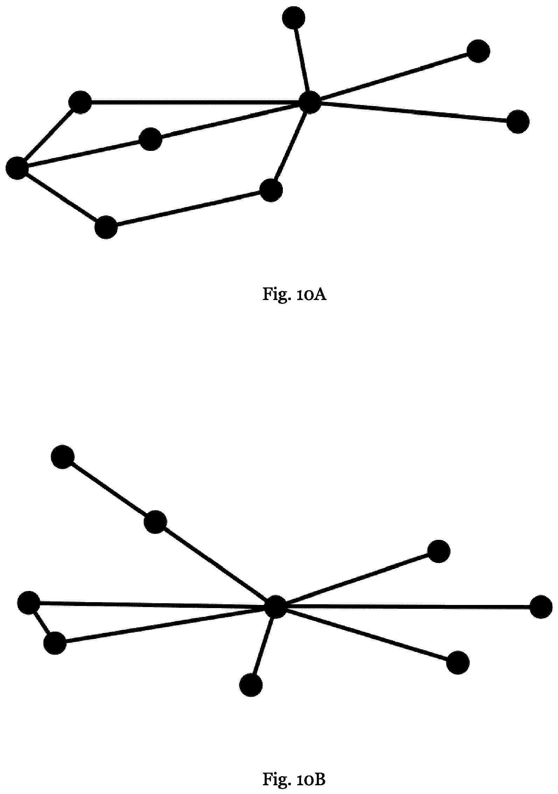

Figs. 10A, 10B illustrate two example graphs comprising nine nodes interconnected by edges of equal weight. The two example graphs are random graphs selected from the tests dataset to which the method illustrated in the flowchart of Fig. 7 has been applied. For both graphs, the quantum approximation ratio for solving the corresponding MaxCut problem has been determined by simulating a QAOA based variational quantum solver 20 on classical hardware for determining an optimal solution obtainable by a variational quantum solver 20 as well as by exactly solving the problem using a classical algorithm and therefrom calculating the quantum approximation ratio ("Actual performance"). Further, the optimal variational parameters associated with the optimal solution obtainable by a variational quantum solver 20 have been recorded ("Actual optimal parameters").

In addition, for each of the graphs, the predicted outputs of two graph neural networks trained on the training dataset comprising graphs with up to eight nodes for predicting the quantum approximation ratio ("Predicted performance") as well as the optimal variational parameters ("Predicted optimal parameters") have been recorded.

Tables 1 and 2 show the recorded results of the simulated variational quantum solver 20 as well as the predicted output of the graph neural networks for the graphs shown in Figs. 10A and 10b, respectively, for three different circuit depths $p$ of the QAOA algorithm, as an additional reference, the cost function using the output of the simulated variational quantum solver 20 for the predicted as well as the actual optimal parameters is provided.

Table 1

|  | p=1 | p=2 | p=3 |
|---|---|---|---|
| Predicted Performance | 0.7752 | 0.8749 | 0.9193 |
| Actual Performance | 0.7782 | 0.8692 | 0.9159 |
| Predicted Optimal Parameters | [-0.111,-0.206] | [-0.157, -0.096, -0.153,-0.303] | [-0.099, -0.11,-0.037, -0.123, -0.21, -0.229] |

(continued)

|  | p=1 | p=2 | p=3 |
|---|---|---|---|
| Actual Optimal Parameters | [-0.125,-0.223] | [-0.142, -0.086, -0.168, -0.254] | [-0.156, -0.093, - 0.06, -0.146, -0.229, -0.216] |
| Cost Function using Predicted Optimal Parameters | 6.9624 | 7.7316 | 7.885 |
| Cost Function using Predicted Optimal Parameters | 7.0041 | 7.8227 | 8.2428 |

Table 2

|  | p=1 | p=2 | p=3 |
|---|---|---|---|
| Predicted Performance | 0.7635 | 0.8579 | 0.8999 |
| Actual Performance | 0.7659 | 0.8559 | 0.9049 |
| Predicted Optimal Parameters | [-0.11, -0.202] | [-0.153, -0.093, -0.148, -0.29] | [-0.099, -0.108, - 0.037, -0.123, - 0.207, -0.226] |
| Actual Optimal Parameters | [-0.117, -0.251] | [-0.109, 0.085, - 0.364, 0.788] | [-0.099, -0.08, 0.068, -0.145. - 0.295, 0.813] |
| Cost Function using Predicted Optimal Parameters | 6.0899 | 6.6523 | 6.8683 |
| Cost Function using Predicted Optimal Parameters | 6.1274 | 6.847 | 7.2394 |

Based on the results above, it can be seen that the graph neural networks are able to predict the approximation ratio for the respective QAOA problems when they are solved by the variational quantum solver 20. Further, the second graph neural network is also able to accurately predict the optimal variational parameters $\gamma, \beta$, such that the cost of the solution using the predicted variational parameters $\gamma, \beta$ is close to the cost using the actual optimal variational parameters $\gamma, \beta$.

It is also noted that the graph neural networks were trained on graphs which are smaller than the graphs in Figs. 10A, 10B showing that the graph neural networks may be used to predict the performance and optimal parameters for problems which are more complicated than the training set and may be used for problems for which classical solutions are difficult to find.

In the previous description, the graph neural networks have been trained based on an approximation ratio using exact solutions. However, the skilled person will appreciate that for larger graphs it may be computationally expensive to determine the exact solutions. Hence, the performance metric may also be based on a ratio between a quantum solution and a classical solution, which may be an approximated solution to the respective QUBO problem, or a performance metric may be used which may be independent of a classical solution, such as a normalized cost of a solution by a variational quantum solver 20.

Further, it is noted that many problems may be converted to a QUBO problem prior to application of the method, such that the method maybe applied also to other problems which can be reformulated as or approximated by a corresponding QUBO problem.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

10      system
12      qubit register

| | |
|---|---|
| 14 | plurality of quantum gates |
| 16 | measurement sensors |
| 18 | controller |
| 20 | variational quantum solver |
| 22 | variational quantum network |
| 23 | quantum device |
| 24a-c | layers of quantum gates |
| 26 | problem graph |
| 28 | candidate solution |
| 30 | classical computation system |
| 32 | cost calculation module |
| 34 | parameter update module |

**Claims**

1. A computer-implemented method for selecting processing hardware based on a given quadratic unconstrained binary optimization, QUBO, problem, said method comprising the steps of:

    encoding the QUBO problem in a corresponding QUBO graph problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation;
    providing the QUBO graph problem as an input to a trained graph neural network on a processing system;
    retrieving a predicted performance metric for solving the QUBO problem with a variational quantum solver (20) from an output of the trained graph neural network to the QUBO graph problem provided at the input;
    based on the predicted performance metric, providing the QUBO problem to the variational quantum solver (20) implemented on quantum hardware (23).

2. The method of claim 1, wherein the trained graph neural network has been trained to estimate the quantum approximation ratio, when solving the QUBO problem with the variational quantum solver (20), or a performance metric based thereon.

3. The method of claim 1 or 2, wherein the trained graph neural network is a convolutional graph neural network, in particular a spatial graph neural network.

4. The method of any one of the preceding claims, wherein the trained graph neural network comprises a plurality of graph convolution layers, wherein each convolution layer comprises an aggregation step for aggregating, for each node of the QUBO graph problem, feature vectors of neighboring nodes into an aggregated feature vector, and a transformation step, wherein an original feature vector of the node and the aggregated feature vector are transformed to an updated feature vector for each node according to a trainable transformation.

5. The method of claim 4, wherein the trained graph neural network comprises a pooling layer for pooling the output of at least one of the plurality of the graph convolution layers, and a fully-connected layer between the pooling layer and an output of the trained graph neural network.

6. The method of any one of the preceding claims, wherein the trained neural network has been trained by:

    receiving a training set, the training set comprising a plurality of QUBO graph problems and a performance metric corresponding to each of the QUBO graph problems, the performance metric indicating a ratio between a quality indicator for a solution candidate (28) determined using the variational quantum solver (20) for the QUBO graph problem and the same quality indicator for a classical solution to the QUBO graph problem, wherein the quality indicator is in particular a cost associated with the solution candidate (28);
    training a graph convolutional network on the training set, wherein the input of the graph convolution network receives the QUBO graph problems, and trainable parameters of the graph convolutional network are iteratively updated, such that the output of the graph convolutional network for a given QUBO graph problem approaches the performance metric.

7. The method of any one of the preceding claims, wherein the variational quantum solver (20) comprises a variational quantum network (22) for determining an output indicative for the solution to the QUBO problem, wherein a gate configuration of the variational quantum network (22) is in particular selected based on the QUBO problem, wherein the variational quantum network (22) is preferably based on a Quantum Approximate Optimization Algorithm, QAOA, and/or wherein the gate configuration preferably depends on a cost function attributing a cost to a solution for the QUBO problem and an optimal solution is associated with a global extremum of the cost function.

8. The method of any one of the preceding claims, wherein the method further comprises, as part of providing the QUBO graph problem to the variational quantum solver (20) implemented on quantum hardware (23):

   providing the QUBO graph problem to a second trained graph neural network, wherein the second trained graph neural network has been trained, for a plurality of QUBO graph problems, to predict variational parameters associated with an optimal solution by the variational quantum solver (20),
   receiving from the second trained graph neural network predicted variational parameters at an output of the second trained graph neural network, and
   providing the predicted variational parameters and the QUBO problem to the variational quantum solver (20) for determining a candidate solution (28) for the problem with the variational quantum solver (20).

9. A computer-implemented method for solving a given quadratic unconstrained binary optimization, QUBO, problem, said method comprising the steps of:

   encoding the QUBO problem in a corresponding QUBO graph problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation;
   providing the QUBO graph problem as an input to a trained graph neural network on a processing system;
   receiving predicted variational parameters for solving the QUBO problem with a variational quantum solver (20) from an output of the trained graph neural network to the QUBO graph problem provided at the input; and
   providing the predicted variational parameters for the QUBO problem to the variational quantum solver (20) implemented on quantum hardware (23).

10. The method of claim 9, wherein the variational quantum solver (20) comprises a variational quantum network (22) for determining an output indicative for the solution to the QUBO problem, wherein the quantum gate configuration of the variational quantum network (22) is specific to the QUBO problem, and wherein the variational parameters define the output of the variational quantum network (22) specific to the QUBO problem, wherein the variational quantum network (22) is in particular based on a Quantum Approximate Optimization Algorithm, QAOA.

11. A system (10) for solving for solving a given quadratic unconstrained binary optimization, QUBO, problem, the system (10) comprising a processing system configured to:

   obtain in a corresponding QUBO graph problem to the QUBO problem, wherein each binary variable of the QUBO problem corresponds to a node of the QUBO graph problem and edges between two nodes encode coefficients of terms containing both binary variables corresponding to the two nodes, or receiving a QUBO graph problem in a QUBO graph representation;
   provide the QUBO graph problem as an input to a trained graph neural network on a processing system;
   receive a predicted performance metric for solving the QUBO problem with a variational quantum solver (20) from an output of the trained graph neural network to the QUBO graph problem provided at the input;
   based on the predicted performance metric, provide the QUBO problem to the variational quantum solver (20) implemented on quantum hardware (23).

12. The system (10) of claim 11, wherein obtaining the corresponding QUBO graph problem comprises encoding, by the processing system, the QUBO problem in the corresponding QUBO graph problem.

13. The system (10) of claim 11 or 12, wherein the system (10) in particular comprises a machine readable model executable on the processing system and/or wherein the system (10) further comprises AI processing hardware configured to implement the trained graph neural network, wherein the AI processing hardware in particular comprises a GPU, a neural processing unit, analog memory based hardware, or neuromorphic hardware.

**14.** The system (10) of any one of claims 11 to 13, wherein the processing system is further configured to:

provide the QUBO graph problem to a second trained graph neural network, wherein the second trained graph neural network has been trained, for a plurality of QUBO graph problems, to predict variational parameters for the variational quantum solver (20) associated with an optimal solution by the variational quantum solver (20), receive from the second trained graph neural network predicted variational parameters at an output of the second trained graph neural network, and

provide the predicted variational parameters and the QUBO problem to the variational quantum solver (20) for determining a candidate solution (28) for the problem with the variational quantum solver (20).

**15.** A computer program comprising machine readable instructions, which when the computer program is executed by a processing system cause the processing system to implement a method according to any one of claims 1-10 and/or to implement a system (10) according to any one of claims 11-14.

Fig. 1

Fig. 2

| encoding the QUBO problem in a corresponding QUBO graph problem, or receiving a QUBO graph problem in a QUBO graph representation | S10 |

| providing the QUBO graph problem as an input to a trained graph neural network on a processing system | S12 |

| retrieving a predicted performance metric for solving the QUBO problem with a variational quantum solver from an output of the trained graph neural network to the QUBO graph problem provided at the input | S14 |

| based on the predicted performance metric, providing the QUBO problem to the variational quantum solver implemented on quantum hardware, or providing the QUBO problem to a classical solver implemented in a classical processing system | S16 |

Fig. 3

**1** input graph

**2** graph aggregation

**3** graph transform

**4** structural information in nodes

**5** pooling, readout, flattening

**6** fully connected layers

**7** output

n times

Fig. 4

| encoding the QUBO problem in a corresponding QUBO graph problem, or receiving a QUBO graph problem in a QUBO graph representation | S20 |
|---|---|

↓

| providing the QUBO graph problem as an input to a trained graph neural network on a processing system | S22 |
|---|---|

↓

| receiving predicted variational parameters for solving the QUBO problem with a variational quantum solver from an output of the trained graph neural network to the QUBO graph problem provided at the input | S24 |
|---|---|

↓

| providing the predicted variational parameters for the QUBO problem to the variational quantum solver implemented on quantum hardware | S26 |
|---|---|

Fig. 5

Fig. 6

Fig. 7

Fig. 8

Fig. 9

Fig. 10A

Fig. 10B

Europäisches
Patentamt

European
Patent Office

Office européen
des brevets

# EUROPEAN SEARCH REPORT

Application Number

EP 22 18 3667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | NISHANT JAIN ET AL: "Graph neural network initialisation of quantum approximate optimisation", ARXIV.ORG, CORNELL UNIVERSITY LIBRARY, 201 OLIN LIBRARY CORNELL UNIVERSITY ITHACA, NY 14853, 4 November 2021 (2021-11-04), XP091093707, * page 1 – page 8 * | 1-15 | INV. G06N10/60 G06N3/04 G06N3/08 |
| A | CHARLES MOUSSA ET AL: "To quantum or not to quantum: towards algorithm selection in near-term quantum optimization", ARXIV.ORG, CORNELL UNIVERSITY LIBRARY, 201 OLIN LIBRARY CORNELL UNIVERSITY ITHACA, NY 14853, 22 January 2020 (2020-01-22), XP081584171, * abstract * | 6 | |
| A | US 2022/101167 A1 (PAKHOMCHIK ALEXEY [CH] ET AL) 31 March 2022 (2022-03-31) * paragraph [0014] – paragraph [0015] * | 7,10 | |

TECHNICAL FIELDS
SEARCHED (IPC)

G06N

The present search report has been drawn up for all claims

| Place of search | Date of completion of the search | Examiner |
|---|---|---|
| The Hague | 14 December 2022 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3667

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2022

| Patent document cited in search report | | Publication date | Patent family member(s) | | Publication date |
|---|---|---|---|---|---|
| US 2022101167 | A1 | 31-03-2022 | AU 2021229219 | A1 | 14-04-2022 |
| | | | CA 3131476 | A1 | 29-03-2022 |
| | | | CN 114358290 | A | 15-04-2022 |
| | | | EP 3975073 | A1 | 30-03-2022 |
| | | | JP 2022058331 | A | 12-04-2022 |
| | | | KR 20220043890 | A | 05-04-2022 |
| | | | US 2022101167 | A1 | 31-03-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FARHI et al.** *A Quantum Approximate Optimization Algorithm*
- **VERDON et al.** *Learning to learn with quantum neural networks via classical neural networks*
- **JAIN et al.** *Graph neural network initialization of quantum approximate optimization*